# EUROPEAN PATENT APPLICATION

(11) **EP 4 412 225 A1**
(43) Date of publication of application: **07.08.2024**
(21) Application number: 22887668.6
(22) Date of filing: 27.10.2022
(51) Int. Cl.: H04N 21/43, H04N 21/433, H04N 21/81, H04N 21/462, H04N 5/77

(54) **METHOD AND DEVICE FOR PROCESSING AND DISPLAYING GRAPHICS AND VIDEO**

(30) Priority: 27.10.2021 KR 20210144971
(71) Applicant: Samsung Electronics Co., Ltd., Suwon-si, Gyeonggi-do 16677 (KR)
(72) Inventor: KWON, Hyukjoong, Suwon-si, Gyeonggi-do 16677 (KR); KIM, Junhyeong, Suwon-si, Gyeonggi-do 16677 (KR); LEE, Hyunsoo, Suwon-si, Gyeonggi-do 16677 (KR)
(74) Representative: Walaski, Jan Filip
(86) International application number: PCT/KR2022/016618
(87) International publication number: WO 2023/075473

(57) **Abstract**

According to an embodiment of the present disclosure, a method, performed by a display device, of processing an image includes obtaining a video and graphics to be displayed on a display, in response to identifying a change in a display region in which the video is displayed, creating a first buffer queue for storing the graphics and a second buffer queue for storing the video, determining a first delay for the first buffer queue based on a picture quality processing mode for the video and storing the graphics in the first buffer queue with a delay equal to the first delay, storing the video in the second buffer queue, processing the graphics stored in the first buffer queue, processing the video stored in the second buffer queue, based on the picture quality processing mode for the video, and mixing the processed graphics with the processed video and outputting a result of the mixing.

## Description

### Technical Field

Embodiments of the present disclosure relate to a method and apparatus for processing a video by a display device, and more particularly, to a method and device for synchronizing graphics and video.

### Background Art

In outputs from a display device, a graphics output is placed above a video output. Therefore, when displaying graphics and video simultaneously on the display device, the graphics output needs to be processed so that the video output may be displayed, and the graphics and video need to be synchronized so that the video is displayed in a designated area.

### Disclosure

### Technical Problem

Among outputs from a display device, a graphics output is placed above a video output, so in order for the video output to be displayed on a screen, the graphics output corresponding to a video output region needs to be removed to make the video output visible. At this time, when the video is not synchronized with the graphics, the video may not be displayed properly because the graphics corresponding to a region where the video is displayed are not removed, or a black border may appear around the region where the video is displayed because the graphics corresponding to a region where the video is not displayed are removed.

Therefore, processing is needed to achieve the synchronization between the video and the graphics.

### Technical Solution

According to an embodiment of the present disclosure, a method, performed by a display device, of processing an image may include receiving a video and generating graphics. According to an embodiment of the present disclosure, the method, performed by the display device, of processing the image may include identifying whether a display region in which the video is displayed has changed. According to an embodiment of the present disclosure, the method, performed by the display device, of processing the image may include creating, based on a result of the identifying, a first buffer queue for storing the graphics and a second buffer queue for storing the video. According to an embodiment of the present disclosure, the method, performed by the display device, of processing the image may include determining a first delay for the first buffer queue based on a picture quality processing mode for the video and storing the graphics in the first buffer queue with a delay equal to the first delay. According to an embodiment of the present disclosure, the method, performed by the display device, of processing the image may include storing the video in the second buffer queue. According to an embodiment of the present disclosure, the method, performed by the display device, of processing the image may include processing the graphics stored in the first buffer queue. According to an embodiment of the present disclosure, the method, performed by the display device, of processing the image may include processing the video stored in the second buffer queue, based on the picture quality processing mode for the video. According to an embodiment of the present disclosure, the method, performed by the display device, of processing the image may include mixing the processed graphics with the processed video and outputting a result of the mixing.

According to another embodiment of the present disclosure, the display region may include at least one of a size and a position at which the video is displayed.

According to another embodiment of the present disclosure, the first delay may indicate a number of queues of the first buffer queue in which frames of the graphics to be delayed and output are stored, relative to the second buffer queue in which a frame of the video corresponding to a time point when the received video is to be displayed in a changed display region is to be stored.

According to another embodiment of the present disclosure, the storing of frames of the graphics in the first buffer queue based on the first delay may include storing, in queues of the first buffer queue allocated before the first delay, frames of the graphics immediately prior to a time point when the received video is displayed in a changed display region, and sequentially storing, in the first buffer queue allocated after the first delay, frames of the graphics from the time point when the received video is displayed in the changed display region.

According to another embodiment of the present disclosure, the picture quality processing mode may be determined based on attributes of the received video.

According to another embodiment of the present disclosure, the display region may be determined based on a size and a position thereof relative to an overall display size of the display device.

According to another embodiment of the present disclosure, the first delay may be determined to increase as the video corresponds to a picture quality processing mode with a higher resolution.

According to an embodiment of the present disclosure, a display device may include an input unit configured to receive a video, an image processing unit configured to process the video, and a display displaying an image signal, and the image processing unit may include a storage storing a program including at least one instruction and at least one processor configured to execute the at least one instruction stored in the storage. According to an embodiment of the present disclosure, in the display device, the at least one processor may execute the at least one instruction to obtain a video and graphics to be displayed on the display. According to an embodiment of the present disclosure, in the display device, the at least one processor may execute the at least one instruction to, in response to identifying a change in a display region in which the video is displayed, create a first buffer queue storing the graphics and a second buffer queue storing the video. According to an embodiment of the present disclosure, in the display device, the at least one processor may execute the at least one instruction to determine a first delay for the first buffer queue based on a picture quality processing mode for the video, and store the graphics in the first buffer queue with a delay equal to the first delay. According to an embodiment of the present disclosure, in the display device, the at least one processor may execute the at least one instruction to store the video in the second buffer queue. According to an embodiment of the present disclosure, in the display device, the at least one processor may execute the at least one instruction to process the graphics stored in the first buffer queue. According to an embodiment of the present disclosure, in the display device, the at least one processor may execute the at least one instruction to process the video stored in the second buffer queue, based on the picture quality processing mode for the video. According to an embodiment of the present disclosure, in the display device, the at least one processor may execute the at least one instruction to mix the processed graphics with the processed video and output a result of the mixing.

Moreover, according to an embodiment of the present disclosure, a computer-readable recording medium has recorded thereon a program for performing the method.

### Description of Drawings

FIG. 1 is an example of a display device according to an embodiment of the present disclosure.
FIG. 2 illustrates a display on which a screen of an application providing multimedia content is displayed in a display device, according to an embodiment of the present disclosure.
FIG. 3 illustrates a video output, a graphics output, and a display output from a display device, according to an embodiment of the present disclosure.
FIG. 4 illustrates a display when a region where a video is displayed is moved in a display device, according to an embodiment of the present disclosure.
FIG. 5 illustrates a display when a size of a region where a video is displayed changes in a display device, according to an embodiment of the present disclosure.
FIG. 6 is a detailed block diagram of an image processing unit in a display device, according to an embodiment of the present disclosure.
FIG. 7 is a flowchart of a method, performed by a display device, of processing an image, according to an embodiment of the present disclosure.
FIG. 8 illustrates a process of storing data in a video buffer queue and a graphics buffer queue over time in a display device, according to an embodiment of the present disclosure.
FIG. 9 illustrates a video delay corresponding to a picture quality processing mode in a display device, according to an embodiment of the present disclosure.

### Mode of Invention

Hereinafter, embodiments of the present disclosure will be described in detail with reference to the accompanying drawings.

In the following description of embodiments, descriptions of technical features that are well known in the art to which the present disclosure pertains and are not directly related to the present disclosure are omitted. This is for clearly describing the essence of the present disclosure without obscuring it by omitting the unnecessary descriptions.

For the same reason, in the accompanying drawings, some components are exaggerated, omitted, or schematically illustrated. Furthermore, the size of each element does not entirely reflect an actual size thereof. In the drawings, the same reference numerals refer to the same or corresponding elements throughout.

Advantages and features of the present disclosure and methods of accomplishing the same will be more readily appreciated by referring to the following description of embodiments and the accompanying drawings. However, the present disclosure is not limited to the embodiments set forth below but may be embodied in many different forms; rather, the embodiments are provided so that the present disclosure will be thorough and complete and will fully convey the scope of the present disclosure to those of ordinary skill in the art, and the present disclosure will only be defined by the appended claims. Throughout the specification, like reference numerals refer to like elements.

It will be understood that each block of a flowchart in the drawings and combinations of blocks of the flowchart may be performed by computer program instructions. These computer program instructions may be loaded into a processor of a general-purpose computer, special-purpose computer, or another programmable data processing equipment, and thus, the instructions performed via the processor of the computer or the other programmable data processing equipment generate a means for performing functions specified in the flowchart block(s). The computer program instructions may also be stored in a computer-executable or computer-readable memory capable of directing a computer or other programmable data processing equipment to implement functions in a specific manner, and thus, the instructions stored in the computer-executable or computer-readable memory may produce an article of manufacture including instruction means for performing the functions specified in the flowchart block(s). The computer program instructions may also be loaded into a computer or other programmable data processing equipment, and thus, instructions for operating the computer or the other programmable data processing equipment by generating a computer-executed process when a series of operations are performed in the computer or the other programmable data processing equipment may provide operations for performing the functions specified in the flowchart block(s).

Furthermore, each block may represent a portion of a module, segment, or code that includes one or more executable instructions for executing specified logical function(s). It should also be noted that, in some alternative implementations, functions mentioned in blocks may occur out of order. For example, two blocks illustrated in succession may be executed substantially simultaneously, or the blocks may sometimes be executed in reverse order depending on functions corresponding thereto.

As used herein, the term 'unit' denotes a software element or a hardware element such as a field-programmable gate array (FPGA) or an application-specific integrated circuit (ASIC), and performs certain functions. However, the term 'unit' is not limited to software or hardware. The 'unit' may be configured to be in an addressable storage medium or configured to operate one or more processors. Thus, the term 'unit' may include, for example, elements such as software elements, object-oriented software elements, class elements, and task elements, processes, functions, attributes, procedures, subroutines, segments of program code, drivers, firmware, micro-codes, circuits, data, a database, data structures, tables, arrays, and variables. Functions provided within the elements and 'units' may be combined into a smaller number of elements and 'units', or may be further divided into additional elements and 'units'. Furthermore, the elements and 'units' may be embodied to reproduce one or more central processing units (CPUs) in a device or security multimedia card. In addition, in an embodiment, the 'unit' may include one or more processors.

Throughout the present disclosure, when a part "includes" or "comprises" an element, unless there is a particular description contrary thereto, the part may further include other elements, not excluding the other elements. Furthermore, terms, such as "portion," "module," etc., used herein indicate a unit for processing at least one function or operation, and may be embodied as hardware or software or a combination of hardware and software.

Throughout the specification, it will be understood that when a part is referred to as being "connected" or "coupled" to another part, it may be directly connected to or electrically coupled to the other part with one or more intervening elements therebetween. Furthermore, when a part "includes" or "comprises" an element, unless there is a particular description contrary thereto, the part may further include other elements, not excluding the other elements.

The expression "configured to (or set to)" used in the present specification may be used interchangeably, according to context, with, for example, the expression "suitable for," "having the capacity to," "designed to," "adapted to," "made to," or "capable of". The term "configured to (or set to)" may not necessarily mean only "specifically designed to" in terms of hardware. Instead, the expression "a system configured to" may mean, in some contexts, the system being "capable of', together with other devices or components. For example, the expression "a processor configured to (or set to) perform A, B, and C" may mean a dedicated processor (e.g., an embedded processor) for performing the corresponding operations, or a general-purpose processor (e.g., a CPU or an application processor (AP)) capable of performing the corresponding operations by executing one or more software programs stored in a memory.

Hereinafter, the present disclosure is described in detail with reference to the accompanying drawings.

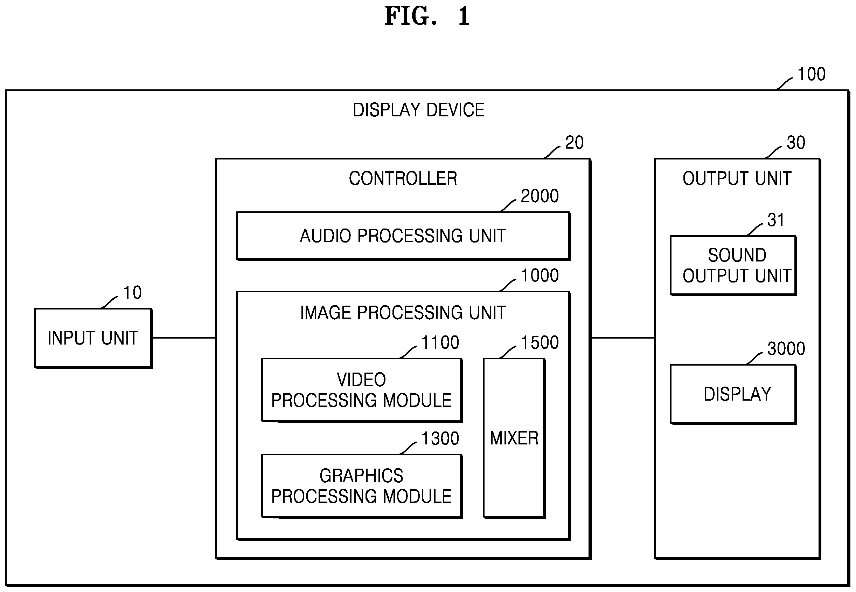

FIG. 1 is an example of a display device according to an embodiment of the present disclosure.

According to an embodiment of the present disclosure, a display device 100 may further include an input unit 10, a controller 20, and an output unit 30.

The input unit 10 receives incoming data from various data sources. For example, the input unit 10 may include a tuner (not shown) for receiving a live stream coming through broadcasting, a universal serial bus (USB) for playing stored media files, a high-definition multimedia interface (HDMI) for receiving an external input from an external playback device or set-top box, a component, etc.

The tuner receives broadcast signals and/or broadcast-related information from the outside via broadcast channels. The broadcast channels may include satellite channels and terrestrial channels.

Furthermore, the input unit 10 may include a communication unit (not shown), and the communication unit may include one or more components that enable communication between the display device 100 and a server device (not shown), and between the display device 100 and an external device (not shown). For example, the communication unit may include a short-range communication unit.

The short-range wireless communication unit may include, but is not limited to, a Bluetooth communication unit, a Bluetooth Low Energy (BLE) communication unit, a near field communication (NFC) unit, a wireless local area network (WLAN) (or Wi-Fi) communication unit, a ZigBee communication unit, an Infrared Data Association (IrDA) communication unit, a Wi-Fi Direct (WFD) communication unit, an ultra-wideband (UWB) communication unit, and an Ant+ communication unit.

The communication unit may obtain content from an external device (not shown). The communication unit may obtain content from the external device via wired or wireless communication. In this case, the external device may include, but is not limited to, a server device, a mobile terminal, wearable devices (e.g., a watch, a band, glasses, a mask, etc.), home appliances (e.g., a TV, a desktop PC, a laptop, a digital versatile disk (DVD) device, a washing machine, a refrigerator, etc.), etc. The content may include multimedia files, video files, and audio files.

The input unit 10 may receive input data in various formats. For example, the input data in various formats may include video data, photo data, and audio data.

The input unit 10 outputs the received input data in various formats and transmits them to the controller 20.

The controller 20 performs all control operations of the display device 100 and may be implemented in hardware, software, or a combination of hardware and software.

A storage (not shown) may store programs to be executed by a processor (not shown) included in the controller. The storage may store a program including at least one instruction for controlling operations of the display device 100.

The storage may store instructions and program code that are readable by the processor. In an embodiment, the processor may be implemented to execute instructions or code of a program stored in the storage. The storage may store data input to or output from the display device 100.

For example, the storage may include at least one type of storage medium among flash memory, a hard disk, a multimedia card micro-type memory, a card-type memory (e.g., an secure digital (SD) memory or an extreme digital (XD) memory), random access memory (RAM), static RAM (SRAM), read-only memory (ROM), electrically erasable programmable ROM (EEPROM), PROM, a magnetic memory, a magnetic disc, and an optical disc.

The processor included in the controller may control all operations of the display device 100. The processor may perform operations according to an embodiment of the present disclosure. For example, the processor may execute programs stored in the storage to control all operations of the input unit 10, the output unit 30, etc.

The processor may be composed of hardware components for performing arithmetic, logic and input/output (I/O) operations and signal processing. For example, the processor may consist of at least one of a CPU, a microprocessor, a graphics processing unit (GPU), application specific integrated circuits (ASICs), digital signal processors (DSPs), digital signal processing devices (DSPDs), programmable logic devices (PLDs), and field programmable gate arrays (FPGAs), but is not limited thereto.

The controller 20 includes an image processing unit 1000 and an audio processing unit 2000.

Among the input data received from the input unit 10, the controller may transmit audio data to the audio processing unit 2000 and image data to the image processing unit 1000 to be processed.

The audio processing unit 2000 decodes the audio data received from the input unit 10 and transmits it to the output unit 30, so that audio is provided to a user via a sound output unit (e.g., a speaker) 31.

The image processing unit 1000 performs all image processing operations of the display device 100 and may be implemented in hardware, software, or a combination of hardware and software.

The image processing unit 1000 may include a video processing module 1100, a graphics processing module 1300, and a mixer 1500.

The image data received from the input unit 10 may include image data captured via a camera or image data generated via graphics processing, such as a game video.

Video is image data that changes with time, and displaying video data by the display device 100 may mean playing the video.

The video processing module 1100 decodes a video received via the input unit and outputs the decoded video to a video plane via a scaler buffer, and includes picture quality processing hardware (e.g., a hardware accelerator, etc.) so that it may output high-quality video.

The graphics processing module 1300 obtains data for graphics processing (e.g., alpha, red, green, and blue (ARGB) and luminance and chrominance (YUV)), which are included in the image data received via the input unit, processes three-dimensional (3D) graphics via a 3D graphics engine (GPU), and outputs a result to the graphic plane.

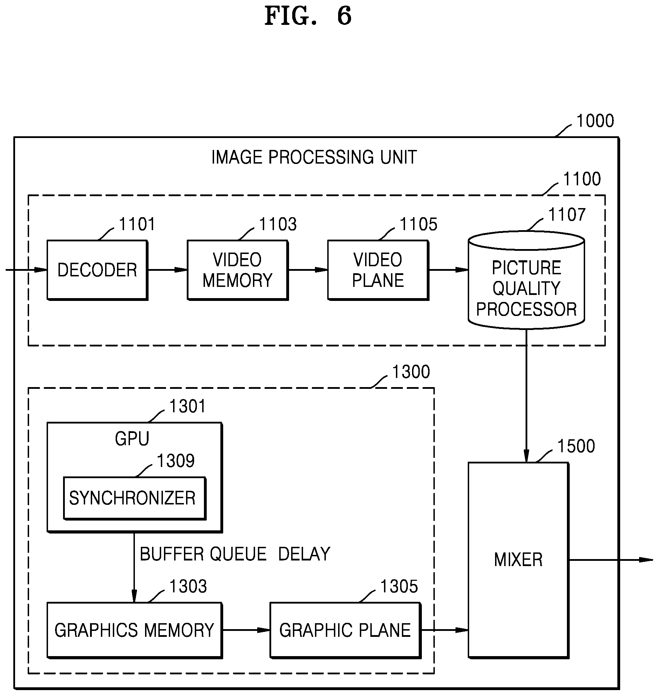

The ARGB and YUV may be obtained by the GPU directly performing software decoding on data included in the image data received via the input unit, or by the video processing module transmitting the decoded YUV to the graphics processing module. The mixer 1500 may mix outputs of the video processing module 1100 and the graphics processing module. A video that is output via the video plane and graphics that are output via the graphic plane are mixed together and output on a screen via a display 3000. According to an embodiment of the present disclosure, the graphics may be mixed after its frame rate is converted according to a frame rate of the video. In this case, the mixer may include a frame rate converter (FRC). The detailed configuration and specific operations of the image processing unit 1000 are described below with reference to FIG. 6.

The output unit 20 is for outputting audio signals or video signals. The output unit 30 may include the sound output unit 31 and the display 3000.

The sound output unit 31 refers to a unit for providing audio to the user by outputting data processed by the audio processing unit 2000 via at least one speaker.

The at least one speaker may output audio data received from the input unit 10 or stored in the storage. A plurality of speakers may output stereophonic sound signals. For example, the plurality of speakers may be each implemented as at least one of a right channel speaker, a left channel speaker, and a mono channel speaker. In addition, the plurality of speakers may output sound signals related to functions performed by the display device 100 (e.g., a notification sound, an announcement voice, and a guide voice).

The display 3000 is a display unit for showing data processed by the image processing unit 1000 to the user via a panel, and for example, serves to output a screen showing a mixture of video and graphics with an adjusted frame rate.

When a screen showing a mixture of the video and graphics is output on the display 3000, a graphic layer output is placed above a video layer output, so the graphics output corresponding to a region where the video is output needs to be deleted so that the region where the video is output may be displayed on the display 3000. In addition, when the region in which the video is output, a graphics output corresponding to the region where the video is output needs to be deleted while the video output is synchronized with the graphics output.

According to an embodiment of the present disclosure, in response to identifying a change in the region where the video is displayed, the display device 100 may compensate for a delay caused by video quality processing by delaying an output of the graphics based on an picture quality processing mode for the video, thereby synchronizing the graphics with the video.

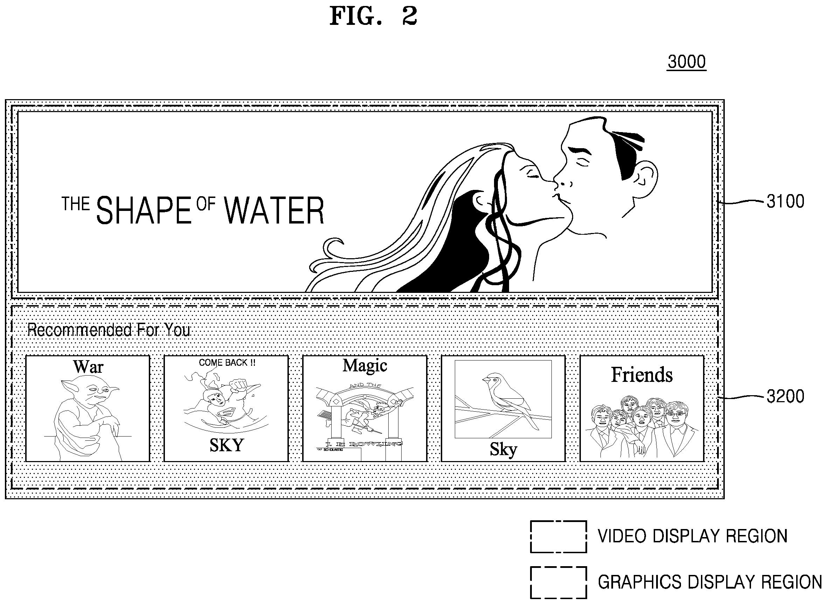

FIG. 2 illustrates a display on which a screen of an application providing multimedia content is displayed in a display device, according to an embodiment of the present disclosure.

Referring to FIG. 2, a screen 3000 of an application providing multimedia content in a display device according to an embodiment of the present disclosure may include a first region 3100, which is a region where a video may be displayed, and a second region 3200, which is a region where graphics may be displayed.

However, when configuring the screen, the application may cause graphics other than the video to be displayed in the first region 3100, and the displayed graphics may be graphic images associated with the video (e.g., thumbnails of the video). Thereafter, when a user input related to display of the video in the first region 3100 (e.g., a user input for moving an indicator to the first region or selecting the first region) is received, the graphics processing module 1300 may be configured to remove a graphics output corresponding to the corresponding region, and the video processing module 1100 may be configured to display (play) the corresponding video in that region.

According to an embodiment of the present disclosure, when an indicator (e.g., a cursor, etc.) corresponding to a user input moves to the first region 3100 on the display 3000 on which the screen of the application is displayed and then the first region 3100 is selected (e.g., highlighted), the graphics processing module 1300 may remove the graphics output corresponding to the first region, and the video processing module 1100 may display the corresponding video in the first region.

According to an embodiment of the present disclosure, when a predetermined input corresponding to display of the video (e.g., the user clicks a selection button on a remote control) is obtained while an indicator (e.g., a cursor, etc.) corresponding to a user input is located in the first region 3100 on the display 3000 on which the display screen is displayed, the graphics processing module 1300 may be configured to remove the graphics output corresponding to the first region, and the video processing module 1100 may be configured to display the corresponding video in the first region.

According to an embodiment of the present disclosure, when a predetermined input corresponding to display of the video (e.g., the user clicks a selection button on a remote control) is obtained while an indicator (e.g., a cursor, etc.) corresponding to a user input is located in the first region 3100 on the display 3000 on which the display screen is displayed, the application may enlarge the first region 3100 where the video is displayed to the entire screen and transmit, to the display device 100, a change in the region where the video is displayed. When identifying the change in the first region, the display device 100 may remove the graphics output corresponding to the changed first region via the graphics processing module 1300 and display the corresponding video in the changed first region via the video processing module 1100.

According to an embodiment of the present disclosure, the screen 3000 of the application providing multimedia content may include a plurality of regions in which video is displayed, and when video is not displayed in a corresponding region (e.g., before a user input related to display of the video is received), only graphics (e.g., a thumbnail of the video) may be displayed in that region.

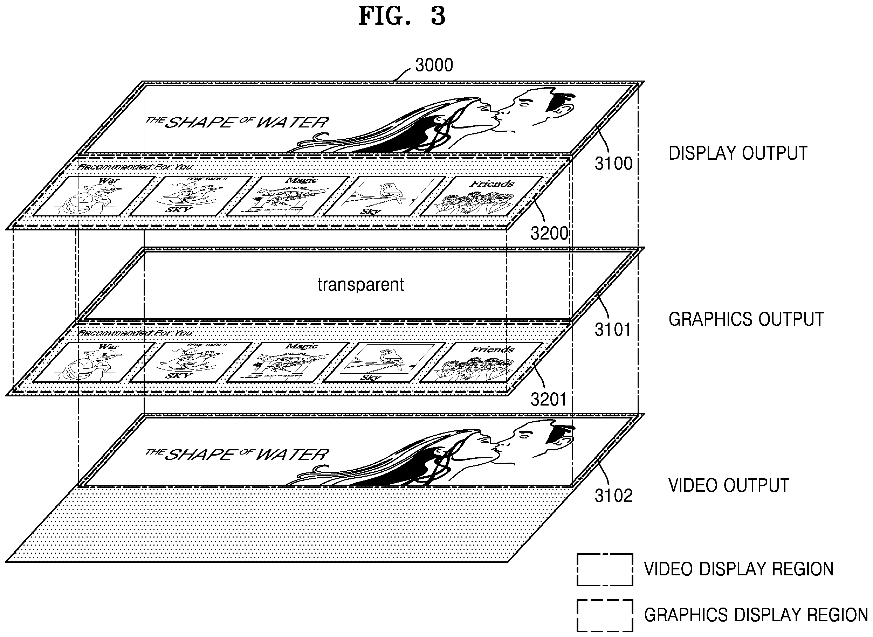

FIG. 3 illustrates a video output, a graphics output, and a display output from a display device, according to an embodiment of the present disclosure.

As described above, the image processing unit 1000 outputs graphics data processed by the graphics processing module 1300 by placing the graphics data above video data processed by the video processing module 1100.

Referring to FIG. 3, in a display device according to an embodiment of the present disclosure, a video output and a graphics output are combined and output on the display.

In the display device 100 according to the embodiment of the present disclosure, when the display 3000 on which a screen of an application providing multimedia content is displayed includes a first region 3100, which is an region where a video is displayed, and a second region 3200, which is an region where graphics are displayed, the image processing unit 1000 displays the video in a video output region 3102 corresponding to the first region. As shown in FIG. 3, because the graphics output is located in an upper layer than the video output, the image processing unit 1000 displays the graphics in a graphic output region 3201 corresponding to the second region 3200 and removes the graphics output from a graphic output region 3101 corresponding to the first region. When the graphics are removed from the graphic output region 3101, the graphic output region 3101 is displayed transparently, so that the video displayed in the video output region 3102 placed at a lower layer may be displayed on the display 3000.

When the graphics are removed from the graphic output region 3101 but a video is not displayed in the video output region 3102 placed in the lower layer, a display output corresponding to a portion where neither the graphics output nor the video output is present is displayed in black.

When the graphics are not removed from the graphic output region 3101 but the video is displayed in the video output region 3102 placed in the lower layer, the graphics output is displayed as a display output corresponding to a portion where both the graphics output and the video output are present.

Therefore, when a graphic output region from which graphics are removed does not match a video output region, a video that appears on the display has a black border, i.e., a black gap, around it, or a portion of the video is obscured by the graphics so it is not visible.

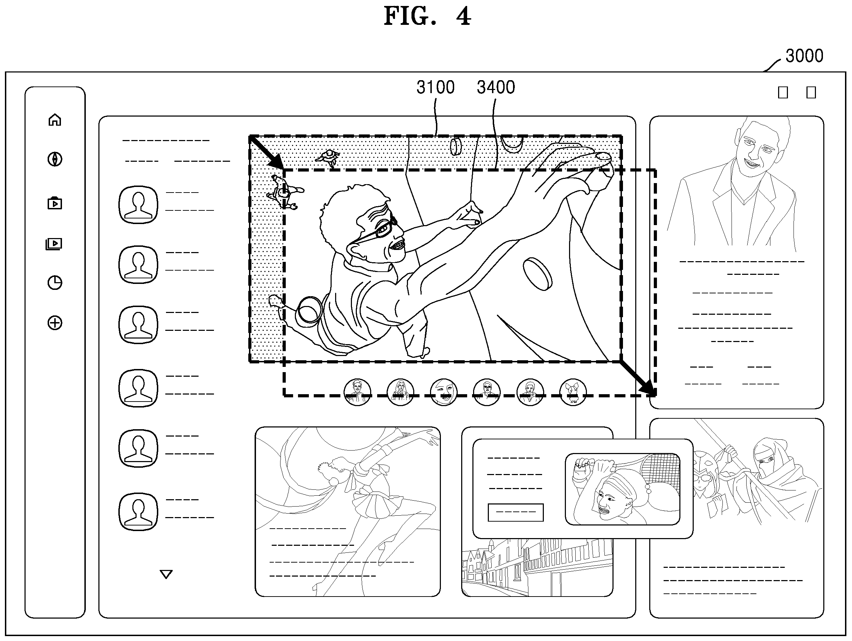

FIG. 4 illustrates a display when a region where a video is displayed is moved in a display device, according to an embodiment of the present disclosure.

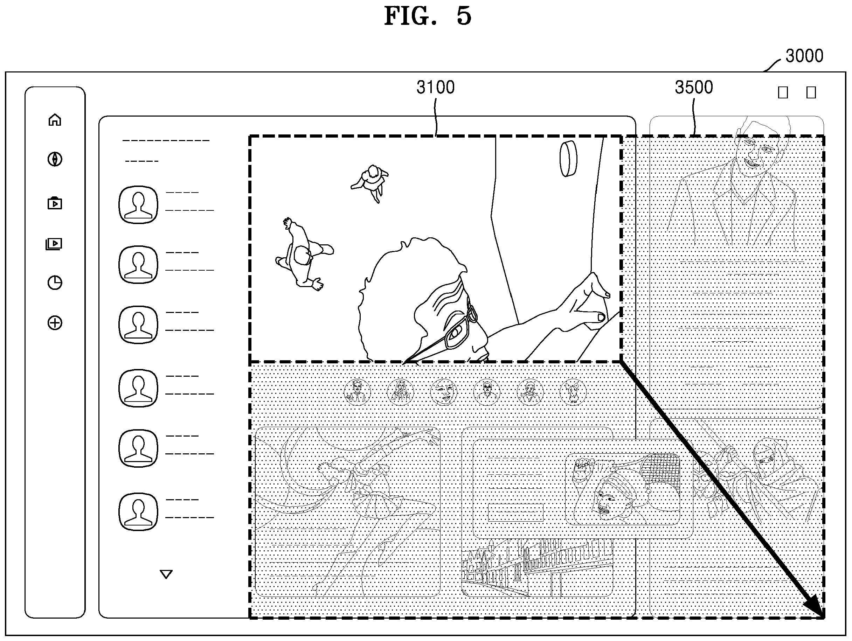

FIG. 5 illustrates a display when a size of the region where the video is displayed changes in the display device, according to an embodiment of the present disclosure.

As described above, because the video processing module 1100 includes picture quality enhancement hardware, a certain delay occurs when processing the video and outputting it on the screen.

Therefore, when a region where the video is displayed changes as shown in FIGS. 4 and 5, even if an application requests the display device 100 to process graphics according to the change in the region where the video is displayed, the graphics are output first and the video is output later, which may cause a black gap region to occur.

Referring to FIG. 4, a screen 3000 of an application providing multimedia content in a display device according to an embodiment of the present disclosure may include a first region 3100 that is an region where a video is displayed.

According to an embodiment of the present disclosure, by removing a graphics output corresponding to the first region 3100 where video data is displayed in the entire display 3000, so that a region 3101 of a graphic plane corresponding to the first region 3100 is displayed transparently, the image processing unit 1000 may cause video data displayed in a region 3102 of a video plane, which is located in a lower layer than the graphic plane, to be displayed on the display 3000.

In FIG. 4, it is assumed that while the video is being displayed in a picture-in-picture (PIP) window in the first region 3100, a region where the video is displayed is moved to a second region 3400 due to a user input (e.g., click and drag), etc.

When the region where the video is displayed moves from the first region 3100 to the second region 3400, if video data and graphics data are out of sync, a black gap occurs in which the video is not displayed even though there is no graphic plane output, or a portion of the video is obscured by the graphic plane and is not displayed, as shown in FIG. 4.

Referring to FIG. 5, the screen 3000 of an application providing multimedia content in the display device according to an embodiment of the present disclosure may include the first region 3100 that is a region where the video is displayed.

According to an embodiment of the present disclosure, by removing a graphics output corresponding to the first region 3100 where video data is displayed in the entire display 3000, so that the region 3101 of the graphic plane corresponding to the first region 3100 is displayed transparently, the image processing unit 1000 may cause video data displayed in the region 3102 of the video plane, which is located in a lower layer than the graphic plane, to be displayed on the display 3000.

In FIG. 5, it is assumed that while video data is being displayed in the first region 3100, the region where the video is displayed is expanded to a second region 3500 due to a user input (e.g., clicking on the first region 3100).

When the region where the video is displayed is expanded from the first region 3100 to the second region 3500, if the video data and the graphics data are out of sync, a portion of the video is obscured by the graphic plane and is not displayed, as shown in FIG. 5.

On the other hand, when the region where the video is displayed is reduced due to a user input while the video is being displayed in the first region 3100, the video may be displayed in only a portion of the first region 3100 and a black gap may occur in the remaining portion thereof.

According to an embodiment of the present disclosure, even when a movement of the region where the video is displayed and a change in the size of the region where the video is displayed occur simultaneously, if the video data and the graphics data are out of sync, a black gap region may occur in which the video may not be displayed even though there is no graphic plane output, or a portion of the video may be obscured by the graphic plane and not displayed, as shown in FIGS. 4 and 5.

When the video data and the graphics data are out of sync, and a fixed delay is added to the graphics to address this, a delay of the video output that changes in real time may not be reflected in the graphics. In addition, when a frame rate of the graphics data is reduced by a difference between the video and graphics in order to synchronize the video data with the graphics data, the image quality of the graphics is degraded. For example, when there is a two-frame difference between video and graphics, reducing the frame rate from 60 frames per second (fps) to 30 fps will not cause a black gap to occur, but reduce the image quality of the graphics by half.

According to an embodiment of the present disclosure, a delay of a video output that changes in real time may be reflected in the graphics to synchronize the graphics and video without degrading the quality of the graphics.

FIG. 6 is a detailed block diagram of an image processing unit in a display device, according to an embodiment of the present disclosure.

Referring to FIG. 6, the image processing unit 1000 may include a video processing module 1100, a graphics processing module 1300, and a mixer 1500.

The video processing module 1100 may include a decoder 1101, a video memory 1103, a video plane 1105, and an picture quality processor 1107.

The graphics processing module 1300 may include a graphics processing unit (GPU) 1301, a graphics memory 1303, and a graphic plane 1305, and the GPU 1301 may include a synchronizer 1309.

The decoder 1101 may decode video data received from the input unit 10 and output the decoded video data to the video memory 1103.

According to an embodiment of the present disclosure, the decoder 1101 may interpret encoded input data and decode image data included in the input data by using a decoding method appropriate for the input data.

By decoding the received video data, the decoder 1101 may identify an picture quality processing mode for the decoded video data.

According to an embodiment of the present disclosure, the decoder 1101 may decode the received video data to identify a type of the video data (e.g., a video, a game, or a PC screen).

An application may determine an picture quality processing level based on the type of video data and a state of a network (e.g., speed, signal strength, and type of the network connected, etc.) to which the display device is connected, and may request the display device 100 to process the picture quality of the video according to the determined picture quality processing level.

According to an embodiment of the present disclosure, the image processing unit 1000 may identify an picture quality processing mode determined based on the picture quality processing level required by the application, the video processing module 1100 may improve the picture quality of the video based on the picture quality processing mode, and the graphics processing module 1300 may determine a delay to be added to graphics based on the picture quality processing mode. The video data decoded by the decoder 1101 may be output to the video memory 1103 of the video processing module 1100.

The video memory 1103 stores the video data output from the decoder and transmits it to the video plane.

Although FIG. 6 shows one video memory 1103, the video memory 1103 may be composed of one or more video memories that receive the video data decoded by the decoder 1101.

The video data output from the video memory 1103 is provided to the video plane in units of image frames.

The video plane 1105 receives and stores an image frame output from the video memory 1103.

The video plane 1105 may be a buffer in which the display device 100 obtains and stores video frames to be output on the display 3000.

One video frame may be stored in one video plane. When the display device 100 includes one video plane, the display device 100 may output a current video frame and then store a next frame in the video plane. According to an embodiment of the present disclosure, the display device 100 may include a plurality of video planes.

The picture quality processor 1107 performs picture quality enhancement processing on an image frame received from the video plane 1105 and provides a resulting image frame to the mixer 1500. Examples of picture quality processing may include at least one of color enhancement, luminance enhancement, contrast processing, and RGB correction. However, the picture quality processing method performed by the display device 100 is not limited to the examples described. After decoding, the display device 100 may perform various post-processing to improve picture quality of the video.

According to an embodiment of the present disclosure, the picture quality processor 1107 improves the picture quality of the video based on the picture quality processing mode, and in this case, a delay incurred by the picture quality processor 1107 for picture quality processing may vary depending on the picture quality processing mode. In general, when a high level of picture quality processing is required, the delay tends to increase.

The decoder 1101 may transmit information about the video data (e.g., thumbnail images, metadata, etc.) obtained by decoding the video data to the GPU 1301 of the graphics processing module 1300.

The GPU 1301 generates a graphic image to be displayed with the video and outputs the graphic image to the graphics memory 1303. The graphic image to be displayed with the video may include information about video data, which is obtained by performing software decoding on data from the input unit 10, or information about the video data obtained from the decoder 1101. According to an embodiment of the present disclosure, the synchronizer 1309 of the graphics processing module 1300 may determine a delay (a buffer queue delay) to be added to the graphics based on the picture quality processing mode.

According to an embodiment of the present disclosure, the synchronizer 1309 may synchronize output of graphics data with output of video data by adjusting output time of the graphics data.

The synchronizer 1309 may identify whether a region where the video is displayed has changed. According to an embodiment of the present disclosure, an application for providing content may detect whether a region in which a video is displayed has changed (e.g., a movement of the region where the video is displayed, or a change in a size of the region where the video is displayed), and transmit, to the synchronizer 1309, information indicating whether the region where the video is displayed has changed.

According to an embodiment of the present disclosure, the application may generate a flag in the graphics processing module 1300 to indicate whether the video display region has changed and create an application programming interface (API) for setting the flag, and when a change in the video display region is identified by the application, the application may set the flag by using the API (e.g., set the flag to 1 when the change in the video display region begins, and set the flag to 0 when the change in the video display region ends). According to an embodiment of the present disclosure, when a change in the region where the video is displayed is identified, the synchronizer 1309 may obtain a synchronization difference between the graphics output and the video output on the hardware according to the picture quality processing mode, and create a buffer queue in the graphics memory 1303 by considering the obtained synchronization difference.

Subsequently, when receiving information about a changed region where the video is to be displayed on an application screen and an output command for the video data and graphics data to be displayed on the application screen, the image processing unit 1000 may request the graphics processing module 1300 to adjust synchronization between the video and the graphics by using the created buffer queue, i.e., to output the graphics with a delay.

When the region where the video is displayed is identified as having changed, the synchronizer 1309 may set a synchronization mode. When the synchronization mode is set, the synchronizer 1309 creates a graphics buffer queue in the graphics memory 1303 to store the generated graphic image.

A queue is a first in first out (FIFO) data structure that dynamically creates buffers. In-queue, which is the operation of adding data to the queue, may be implemented at low cost, and when the queue is implemented in the form of a ring buffer, this implementation may solve the problem of having to move all elements to the front in de-queue that is the operation of outputting data from the queue.

In this case, the synchronizer 1309 stores the graphic image in the graphic buffer queue by adding a certain delay in order to synchronize the graphics data with the video data.

According to an embodiment of the present disclosure, the synchronizer 1309 may determine a certain delay to be added to the graphics buffer queue based on the picture quality processing mode for the video. As described above, because the higher the picture quality level required by an application or video, the slower the video processing speed and the larger the speed difference from graphics processing, the synchronizer 1309 may determine that the certain delay to be added to the graphics buffer queue increases as the picture quality level required by the application or video increases.

According to an embodiment of the present disclosure, when the picture quality processing mode changes, the synchronizer 1309 may reflect the change in real time and change a certain delay to be added to the graphics buffer queue.

When the region where the video is displayed is identified as having not changed, the synchronizer 1309 may maintain a normal mode, i.e., a state in which the synchronization mode is released. According to an embodiment of the present disclosure, in the normal mode, the synchronizer may be configured not to operate, and the GPU 1301 may output the generated graphic image directly to the graphics memory 1303 without buffering or queuing.

When the region in which the video is displayed has not changed, the video is displayed in the same region where the previous frame of the previous video was displayed, so even if a delay occurs during processing for improving the picture quality of the video and the video and graphics are out of sync, a black gap or a portion of the video not displayed due to a change in the video display region does not occur.

The graphics memory 1303 stores the graphics image received from the GPU 1301 and outputs it to the graphic plane 1305.

When the region where the video is displayed is identified as having changed and a synchronization mode is set, a first buffer queue for storing graphics is created in the graphics memory 1303, and the graphic image is delayed by a certain delay determined by the synchronizer 1309 and stored in the first buffer queue. Furthermore, when the region where the video is displayed is identified as being changed and the synchronization mode is set, a second buffer queue for storing a video is created in the video memory 1103, and the graphic image is stored in the second buffer queue without a delay.

In this case, frames of a graphic image are stored one by one in each buffer in the first buffer queue, and frames of a video image may be stored one by one in each buffer in the second buffer queue.

In addition, data stored in each buffer queue may store information about each image data (e.g., an index of each frame or a pointer to a location where actual image data is stored) instead of the actual image data.

When the change in the region where the video is displayed is identified as complete and the synchronization mode is released or changed to the normal mode, the image processing unit 1000 may delete the first buffer queue and the second buffer queue to prevent unnecessary memory occupation.

The graphic plane 1305 may store graphic frames. The graphic plane 1305 may be a buffer in which the display device 100 obtains and stores graphic frames to be output on the display 3000. The display device 100 may draw a graphic frame on the graphic plane 1305. Drawing a graphic frame on the graphic plane 1305 may mean writing pixel values for pixels constituting the graphic frame to the graphic plane 1305. In other words, drawing a graphic frame may mean storing the graphic frame.

A graphic frame may be composed of a plurality of pixels. Each of the plurality of pixels may have a pixel value. A pixel value may be RGB data. RGB data may be expressed as (R, G, B). Here, R, G, and B denote red data, green data, and blue data, respectively. For example, when each of R, G, and B data is represented by 8 bits, each of R, G, and B has any one of 256 levels. R, G, and B expressed at their respective levels may be color-mixed to represent a color. For example, RGB data may represent white when RGB values are (255, 255, 255) and represent black when RGB values are (0, 0, 0).

When the display device 100 draws a graphic frame, the graphic frame may be temporarily stored in the graphic plane 1305. The display device 100 may output the obtained graphic frame on the screen. When the graphics frame is output, the display device may draw a next graphic frame on the graphic plane 1305.

The mixer 1500 mixes the output of the graphic plane 1305 with the output of the picture quality processor 1107 and transmits a mixture thereof to the display 3000.

The video processing module 1100 has a slower processing speed than the graphics processing module 1300 because it includes the picture quality processor 1107 for improving picture quality or PQ.

Also, the higher the picture quality level required by the application or video, the slower the video processing speed, and the larger the speed difference from graphics processing.

According to an embodiment of the present disclosure, the mixer 1500 may include a FRC for converting a frame rate of the output of the graphic plane 1305 to match the frame rate with that of the video that is the output of the picture quality processor 1107. Generally, the higher the picture quality level required by the application or video, the higher the frame rate of the video, so the mixer 1500 converts the output of the graphic plane 1305 to a higher frame rate.

As described above with reference to FIGS. 4 and 5, when the output video data and graphics data are out of sync, a black gap may occur where the video is not displayed even though there is no graphic plane output, or a portion of the video may be obscured by the graphic plane and not displayed.

When the synchronization mode is set and graphics are stored in the first buffer queue with a delay, the output of the graphics memory 1303 and the output of the graphics plane 1305 are also delayed. Thus, a delay equal to the time it takes for the picture quality processor 1107 to perform picture quality enhancement processing on the video output from the video plane 1105 may be compensated for by the graphic delay, so that the video may be synchronized with the graphics.

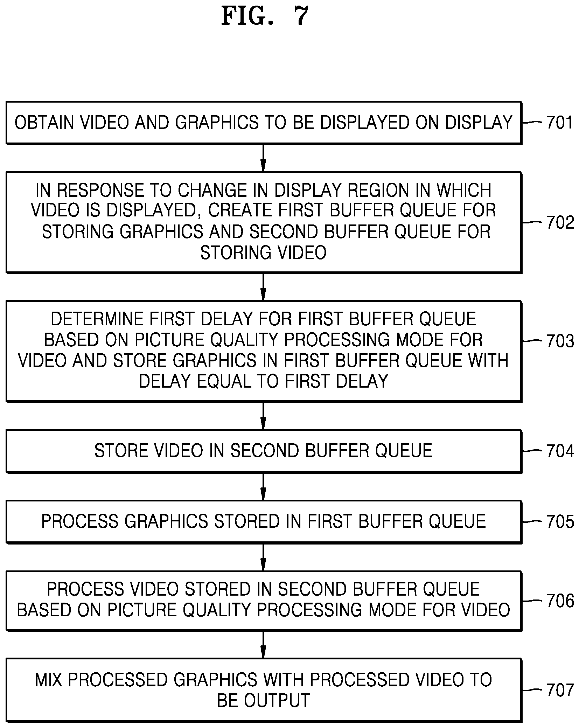

FIG. 7 is a flowchart of a method, performed by a display device, of processing an image, according to an embodiment of the present disclosure.

The display device 100 that performs a method of processing an image according to an embodiment of the present disclosure illustrated in FIG. 7 may include the input unit 10, the controller 20, and the output unit 30, and the controller 20 may include the image processing unit 1000 and the audio processing unit 2000. Furthermore, the image processing unit 1000 may include the decoder 1101, the video processing module 1100, and the graphics processing module 1300, and the graphics processing module 1300 may include the GPU 1301 and the synchronizer 1309.

In the description of FIG. 7, descriptions already provided above with respect to FIGS. 1 and 6 may be briefly described or omitted.

In operation 701, the display device 100 obtains a video and graphics to be displayed on the display.

Video refers to image data that changes with time, and may be included in image data received via the input unit 10. The image data received via the input unit may further include pieces of data related to the video, such as thumbnail images or metadata, in addition to the video.

According to an embodiment of the present disclosure, the image data received via the input unit 100 is decoded by the decoder 1101 of the video processing module 1100, and the decoder 1101 delivers the decoded video to the video memory.

The graphics are graphic images to be displayed by the display device 100 together with the video, and the GPU 1301 may generate the graphics which include a graphical user interface (GUI) required by an application providing multimedia content and information about the decoded video.

The information about the decoded video may be obtained by the graphics processing module 1300 performing software decoding on the image data received via the input unit 10, or may be obtained from the decoder 1101.

For example, an over-the-top (OTT) application may request the display device 100 to display a list of videos provided by the application, and generate graphic images including information, such as thumbnail images, a title, and characters associated with a video in the list of videos, and display the graphic image.

In operation 702, in response to identifying a change in a display region in which the video is displayed, the display device 100 creates a first buffer queue for storing the graphics and a second buffer queue for store the video.

According to an embodiment of the present disclosure, the application providing multimedia content may recognize a change in the region where the video is displayed in an application screen displayed on the display 3000.

For example, when a user input related to movement of a region where the video is played, which is included in the application screen, is received, the application may recognize that the region where the video is played is moved. Alternatively, when a user input related to a change in a size of the region where the video is played in the application screen is received, the application may recognize that the size of the region where the video is played is changed.

In addition, when the movement or size change of the region where the video is played ends, the application may recognize whether the change in the region where the video is displayed has ended.

According to an embodiment of the present disclosure, an application that recognizes a change in the region where the video is displayed may transmit, to the display device 100, information indicating that the region where the video is displayed has changed, and the display device 100 may identify whether the region where the video is displayed has changed.

According to an embodiment of the present disclosure, when the region where the video is displayed is identified as having changed, the synchronizer 1309 may set a synchronization mode (e.g., set to 1 a flag indicating whether the synchronization mode is set). Furthermore, when the change in the region where the video is displayed is identified as having ended, the synchronizer 1309 may release the synchronization mode (e.g., set to 0 a flag indicating whether the synchronization mode is set).

According to an embodiment of the present disclosure, according to identification of the start and end of the change in the region where the video is displayed, the synchronizer 1309 may switch (toggle) between the normal mode and the synchronization mode.

When the synchronization mode is released, the display device 100 may delete a buffer queue to use memory more efficiently.

As described above, the image processing unit 1000 outputs graphics data processed by the graphics processing module 1300 by placing the graphics data above video data processed by the video processing module 1100. The graphics processing module 1300 removes a graphic output from a region corresponding to the region where the video is displayed and makes the corresponding region transparent, so that the video displayed in the video output region placed in the lower layer is displayed on the display.

Therefore, when the display region where the video is displayed is changed, i.e., when the synchronization mode is set, the graphics processing module 1300 should remove a graphics output corresponding to a changed video output region so that the video is displayed in the changed video output region.

In this case, the graphics and video become out of sync after the display region where the video is displayed is changed due to a difference between video processing speed of the video processing module 1100 and graphics processing speed of the graphics processing module 1300, and thus, synchronization is required to compensate for this.

According to an embodiment of the present disclosure, in order to synchronize the graphics and video that are out of sync due to a video processing delay, the image processing unit 1000 creates a first buffer queue for storing graphics in the graphics memory 1303 and a second buffer queue for storing video in the video memory 1103.

In this case, frames of a graphic image are stored one by one in each queue in the first buffer queue, and frames of a video image may be stored one by one in each queue in the second buffer queue.

In addition, data stored in each buffer queue may store information about each image data (e.g., an index of each frame or a pointer to a location where actual image data is stored) instead of the actual image data.

In operation 703, the display device 100 determines a first delay for the first buffer queue based on a picture quality processing mode for the video, and stores the graphics in the first buffer queue with a delay equal to the first delay.

Because the video processing speed of the video processing module 1100 is slower than the graphics processing speed of the graphics processing module 1300, a certain delay has to be added to a graphic frame input to the mixer in order to synchronize the graphics with the video.

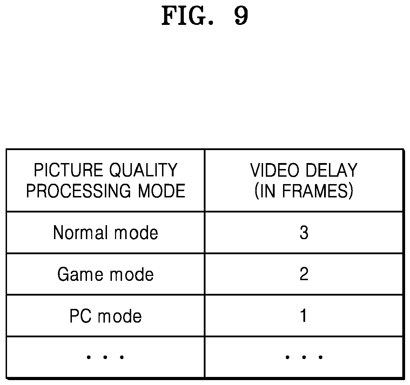

Accordingly, the graphics processing module 1300 determines the first delay for storing the graphics frame in the first buffer queue of the graphics memory 1303 with a delay. In this case, because the first delay is related to the processing speed of the video processing module 1100, the graphics processing module 1300 may determine the first delay for the first buffer queue based on the picture quality processing mode for the video. A specific method of determining the first delay for the first buffer queue based on the picture quality processing mode for the video is described in detail with reference to FIG. 9.

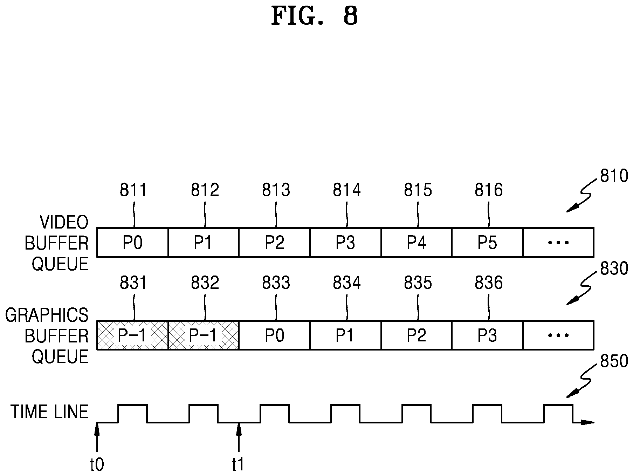

After the first delay is determined, the graphics processing module 1300 stores graphic frames sequentially from a queue allocated after the first delay. A graphics frame immediately prior to a time point when the video is displayed in the changed display region is stored in a queue allocated before the first delay. A specific method of storing image frames in a buffer queue with a delay is described in detail with reference to FIG. 8.

In operation 704, the display device 100 stores the video in the second buffer queue.

Because a video input is received and processed in real time, the video processing module 1100 does not add an additional delay to the video.

In operation 705, the display device 100 processes the graphics stored in the first buffer queue.

The graphics processing module 1300 transmits, to the graphic plane 1305, the graphics stored in the first buffer queue included in the graphics memory 1303, and the graphics plane 1305 processes and outputs the graphics received from the graphics memory 1303.

In operation 706, the display device 100 processes the video stored in the second buffer queue based on the picture quality processing mode for the video.

The video processing module 1100 transmits, to the video plane 1105, the video stored in the second buffer queue included in the video memory 1103, and the video plane 1105 processes the video received from the video memory 1103 and transmits it to the picture quality processor 1107. The picture quality processor 1107 performs picture quality processing (post-processing) to improve picture quality of the video received from the video plane 1105 and outputs the resulting video.

In operation 707, the display device 100 mixes the processed graphics with the processed video and outputs a mixture thereof.

The mixer 1500 mixes the video output from the picture quality processor 1107, which is delayed during the picture quality enhancement processing, with the output of the graphics plane 1305 delayed by artificially adding the first delay.

Through operations 701 to 706 described above, the output of the graphics plane 1305, i.e., the graphic frame input to the mixer 1500, is delayed by the first delay, and a delay due to the processing by the picture quality processor 1107 of the video processing module 1100 is compensated for by this graphics delay, so that the graphics and video may be synchronized.

FIG. 8 illustrates a process of storing data in a video buffer queue and a graphics buffer queue over time in a display device, according to an embodiment of the present disclosure.

Referring to FIG. 8, 810 represents a video buffer queue, 830 represents a graphics buffer queue, and 850 represents the passage of time.

A video input is received and processed in real time, so no additional delay is added to a video. Thus, a first video frame P0 to be output after a display region where the video is displayed is changed is stored in a first queue 811 of the video buffer queue 810, and subsequent video frames P1, P2, ..., and P5 are sequentially stored in queues 812, 813, ..., and 816, respectively.

A certain delay should be added to the graphics buffer queue to compensate for a video processing delay. Referring to FIG. 8, a case where a video processing delay of 2 frames occurs is assumed. In other words, this corresponds to a situation in which a video output is delayed by the time of t1-t0 due to picture quality improvement processing of the video, and the time is converted using a frame rate and requires two frames (2vsync) for synchronization between the video and graphics).

In this case, to add a delay of 2 frames to a graphics output, a first graphic frame P0 to be output after the display region where the video is displayed is changed is stored in a third queue 833, and subsequent graphic frames P1, P2, P3,... are sequentially stored in queues 834, 835, 836,... respectively.

At this time, a graphic frame P-1 before the display region is changed is stored in queues 831 and 832 preceding the queue 833 in which the first graphic frame P0 is stored.

Because a graphic frame remains unchanged and fixed before the display region is changed, problems due to synchronization failure do not occur even when the graphic frame P-1 before the display region is changed is repeatedly output.

Through this, the output of the graphics plane 1305, i.e., the graphics input to the mixer 1500, is delayed by 2 frames, and the delay due to the processing by the picture quality processor 1107 of the video processing module 1100 is compensated for by this graphics delay, so that the graphics and video may be synchronized.

FIG. 9 illustrates a video delay corresponding to an picture quality processing mode in a display device, according to an embodiment of the present disclosure.

Referring to FIG. 9, a picture quality processing mode may include a normal mode for a video, a game mode for a game, and a PC mode for a PC screen.

Video delays for each mode may correspond to 3 frames in the normal mode, 2 frames in the game mode, and 1 frame in the PC mode, and the synchronizer 1309 may refer to the video delays for each mode to determine a delay to be added to graphics.

However, the picture quality processing modes are not limited to those shown in FIG. 9, and may be determined in various ways depending on attributes, resolution, or receiving environment of the video.

Additionally, the video delays corresponding to the picture quality processing modes are not limited to those shown in FIG. 9, and may vary depending on a frame rate of the video or the performance of picture quality processor 1107. Accordingly, the synchronizer 1309 may determine a delay to be added to the graphics by referring to video delays for various modes.

Methods according to embodiments as described in the claims and the specification of the present disclosure may be implemented in the form of hardware, software, or a combination of hardware and software.

When implemented in software, a computer-readable storage medium or computer program product storing one or more programs (software modules) may be provided. The one or more programs stored in the computer-readable storage medium or computer program product are configured for execution by one or more processors in an electronic device. The one or more programs include instructions that cause the electronic device to perform the methods according to the embodiments as described in the claims and the specification of the present disclosure.

The programs (e.g., software modules or software) may be stored in RAM, non-volatile memory including flash memory, ROM, EEPROM, a magnetic disc storage device, a compact disc-ROM (CD-ROM), a digital versatile disc (DVD) or other forms of optical storage devices, or a magnetic cassette. Alternatively, the programs may be stored in memory including a combination of some or all of the above-described storage media. Furthermore, a plurality of such memories may be included.

In addition, the programs may be stored in an attachable storage device accessible through any or a combination of communication networks such as an internet, an intranet, a LAN, a WLAN, and a storage area network (SAN). Such a storage device may access, via an external port, a device for implementing the embodiments of the present disclosure. A separate storage device on the communication network may also access the device for implementing the embodiments of the present disclosure.

In the present disclosure, the term "computer program product" or "computer-readable medium" are used to collectively refer to media such as a memory, a hard disk installed in a hard disk drive, and signals. The "computer program product" or "computer-readable medium" may refer to a means provided to a software computer system including instructions for setting a length of a timer for receiving missing data packets, based on a network metric corresponding to a determined event according to the present disclosure.

A machine-readable storage medium may be provided in the form of a non-transitory storage medium. In this regard, the term 'non-transitory' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer in which data is temporarily stored.

According to an embodiment, methods according to various embodiments of the present disclosure may be included in a computer program product when provided. The computer program product may be traded, as a product, between a seller and a buyer. The computer program product may be distributed in the form of a machine-readable storage medium (e.g., CD-ROM) or distributed (e.g., downloaded or uploaded) on-line via an application store (Google Play Store^{™}) or directly between two user devices (e.g., smartphones). For online distribution, at least a part of the computer program product (e.g., a downloadable app) may be at least transiently stored or temporally generated in the machine-readable storage medium such as memory of a server of a manufacturer, a server of an application store, or a relay server.

A machine-readable storage medium may be provided in the form of a non-transitory storage medium. In this regard, the term 'non-transitory' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer in which data is temporarily stored.

According to an embodiment, methods according to various embodiments of the present disclosure may be included in a computer program product when provided. The computer program product may be traded, as a product, between a seller and a buyer. The computer program product may be distributed in the form of a machine-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in the machine-readable storage medium such as memory of a server of a manufacturer, a server of an application store, or a relay server.

In the specific embodiments of the present disclosure described above, components included in the present disclosure are expressed in a singular or plural form depending on the specific embodiment presented. However, the singular or plural expression is selected appropriately for a situation assumed for convenience of description, and the present disclosure is not limited to components in a singular or plural form, i.e., an element expressed in a plural form may be a single component, or and an element expressed in a singular form may include a plurality of elements.

While the specific embodiments have been described in the detailed description of the present disclosure, it will be understood various modifications may be made therein without departing the scope of the present disclosure. Therefore, the scope of the present disclosure should not be limited to the embodiments described, but should be defined by the scope of the following claims and equivalents thereof.

## Claims

1. A method, performed by a display device, of processing an image, the method comprising:
obtaining a video and graphics to be displayed on a display (701);
in response to identifying a change in a display region (3100) in which the video is displayed, creating a first buffer queue (830) for storing the graphics and a second buffer queue (810) for storing the video (702);
determining a first delay for the first buffer queue based on a picture quality processing mode for the video, and storing the graphics in the first buffer queue with a delay equal to the first delay (703);
storing the video in the second buffer queue (704);
processing the graphics stored in the first buffer queue (705);
processing the video stored in the second buffer queue, based on the picture quality processing mode for the video (706); and
mixing the processed graphics with the processed video and outputting a result of the mixing (707).

2. The method of claim 1, wherein the display region (3100) comprises at least one of a size and a position at which the video is displayed.

3. The method of claim 1, wherein the first delay indicates a number of queues of the first buffer queue (830) in which frames of the graphics to be delayed and output are stored, relative to the second buffer queue (810) in which a frame of the video corresponding to a time point when the received video is to be displayed in a changed display region is to be stored.

4. The method of claim 1, wherein
the storing of frames of the graphics in the first buffer queue (830) based on the first delay comprises:
storing, in queues of the first buffer queue (830) allocated before the first delay, frames of the graphics immediately prior to a time point when the received video is displayed in a changed display region; and sequentially storing, in the first buffer queue (830) allocated after the first delay, frames of the graphics from the time point when the received video is displayed in the changed display region.

5. The method of claim 1, wherein the picture quality processing mode is determined based on attributes of the received video.

6. The method of claim 1, wherein the display region (3100) is determined based on a size and a position thereof relative to an overall display size of the display device.

7. The method of claim 1, wherein the first delay increases as the video corresponds to a picture quality processing mode with a higher resolution.

8. A display device comprising:
an input unit (10) configured to receive a video;
an image processing unit (1000) configured to process the video; and
a display (3000) displaying an image signal,
wherein the image processing unit (1000) comprises:
a storage storing a program including at least one instruction; and
at least one processor configured to execute the at least one instruction stored in the storage to
obtain a video and graphics to be displayed on the display (701), in response to identifying a change in a display region (3100) in which the video is displayed, create a first buffer queue (830) for storing the graphics and a second buffer queue (810) for storing the video (702), determine a first delay for the first buffer queue based on a picture quality processing mode for the video, and store the graphics in the first buffer queue with a delay equal to the first delay (703),
store the video in the second buffer queue (704),
process the graphics stored in the first buffer queue (705),
process the video stored in the second buffer queue, based on the picture quality processing mode for the video (706), and
mix the processed graphics with the processed video and output a result of the mixing (707).

9. The display device of claim 8, wherein the display region (3100) comprises at least one of a size and a position at which the video is displayed.

10. The display device of claim 8, wherein the first delay indicates a number of queues of the first buffer queue (830) in which frames of the graphics to be delayed and output are stored, relative to the second buffer queue (810) in which a frame of the video corresponding to a time point when the received video is to be displayed in a changed display region is to be stored.

11. The display device of claim 8, wherein the at least one processor is further configured to
store, in queues of the first buffer queue (830) allocated before the first delay, frames of the graphics immediately prior to a time point when the received video is displayed in a changed display region, and sequentially store, in the first buffer queue (830) allocated after the first delay, frames of the graphics from the time point when the received video is displayed in the changed display region.

12. The display device of claim 8, wherein the picture quality processing mode is determined based on attributes of the received video.

13. The display device of claim 8, wherein the display region (3100) is determined based on a size and a position thereof relative to an overall display size of the display device.

14. The display device of claim 8, wherein the first delay increases as the video corresponds to a picture quality processing mode with a higher resolution.

15. A computer-readable recording medium having recorded thereon a program for performing the method of any one of claims 1 to 7 on a computer.
